# EUROPÄISCHE PATENTSCHRIFT

(11) **EP 3 691 443 B1**
(45) Veröffentlichungstag und Bekanntmachung des Hinweises auf die Patenterteilung: **13.12.2023**
(21) Anmeldenummer: 18782388.5
(22) Anmeldetag: 02.10.2018
(51) Int. Cl.: A01J 5/08

(54) **ZITZENGUMMI**
TEAT CUP LINER
MANCHON TRAYEUR

(30) Priorität: 05.10.2017 DE 102017123166
(43) Veröffentlichungstag der Anmeldung: 12.08.2020
(73) Patentinhaber: Happel, Werner, 88682 Salem (DE)
(72) Erfinder: Happel, Werner, 88682 Salem (DE)
(86) Internationale Anmeldenummer: PCT/EP2018/076724
(87) Internationale Veröffentlichungsnummer: WO 2019/068676

(56) Entgegenhaltungen:
- EP-A2- 1 219 166
- CH-A- 477 812
- DE-A1-102006 026 271
- DE-A1-102006 040 079

## Beschreibung

Die Erfindung betrifft einen Zitzengummi gemäß dem Oberbegriff des Patentanspruches 1.

Beim maschinellen Melken ist eine schonende Zitzenbehandlung von entscheidender Bedeutung. Diese schonende Zitzenbehandlung ist beispielsweise bei Melksystemen gewährleistet, bei denen in der Massagephase eine Vakuumentlastung erfolgt, wie es auch bei dem natürlichen Kalbsaugen der Fall ist. Durch diese Vakuumentlastung wird die Zitzenkondition nachweisbar positiv beeinflusst. Ein derartiges Melksystem ist beispielsweise in der EP 1 119 235 B1 offenbart.

Der Milchtransport zu einem Sammelstück lässt sich weiter verbessern, wenn im Zitzengummi ein Belüftungskanal vorgesehen ist, wie er beispielsweise in der DE 10 2006 026 271 A1 beschrieben ist. Dabei ist im Zitzengummikopf eine Belüftungsdüse vorgesehen, über die ein Kopfinnenraum zur Atmosphäre hin belüftet ist. Durch diese Belüftung ist gewährleistet, dass sich im Zitzengummikopf kein übermäßiges Vakuum ausbilden kann. Die bekannten Vorteile für den Lufteinlass beim Melken am Zitzengummi sind - wie oben ausgeführt - ein besserer Milchtransport und kein Rückspray vom Sammelstück. Des Weiteren wird durch die Kombination mit dem oben beschriebenen tiergerechten Entlastungssystem in der Massagephase durch die zugeführte Luft die gewünschte Vakuumentlastung bewirkt. Die Verwendung derartiger Zitzengummi hat in den letzten Jahren insbesondere durch die höheren Minutengemelke der Herden große Bedeutung gewonnen.

Ein Problem bei der Umsetzung dieser schonenden Lösung besteht darin, dass die Belüftungsdüsen bedingt durch die schwierigen hygienischen Bedingungen der Melkzeuge im Melkstand verschmutzen können. Zur Vermeidung einer daraus resultierenden Verstopfung wird in der WO 2015/055821 A1 vorgeschlagen, die Belüftungsdüse aus einem elastisch verformbaren Material auszubilden und einen Teilbereich der Düse aus der Außenkontur des Zitzengummis auskragen zu lassen, so dass diese Belüftungsdüse auf einfache Weise von Hand durch elastische Deformation gereinigt werden kann.

Ein Nachteil der bisherigen Lösungen ist jedoch, dass durch den Belüftungskanal am Zitzengummi zwar ein Lufteinlass in Richtung zu dem Innenraum unter der Zitze sichergestellt ist. Dabei handelt es sich jedoch um einen kontinuierlichen Lufteinlass an jedem Zitzengummi, was einen erhöhten Luftverbrauch zur Folge hat, der mit entsprechenden Zusatzkosten für die Vakuumerzeugung einhergeht. Des Weiteren muss die Vakuumpumpe mit vergleichsweise hoher Leistung ausgeführt sein. Hinzu kommt das Risiko, dass durch den erhöhten Lufteinlass Membranen der Milch beschädigt werden können und beispielsweise freie Fettsäuren gebildet werden, die die Milchqualität negativ beeinträchtigen.

Ein weiterer Nachteil besteht darin, dass durch den kontinuierlichen Lufteinlass, der auch in der Saugphase erfolgt, das Vakuum in der Saugphase reduziert wird - dies geht mit einer Verlangsamung des Melkvorganges einher. Problematisch kann der kontinuierliche Lufteinlass auch dann sein, wenn eine Anlage derart konzipiert ist, dass die Milch vom Melkzeug in ein höher verlegtes Milchleitungssystem transportiert werden muss.

Ein weiterer Nachteil der herkömmlichen, durchgehenden Belüftungspassage, bei der sich der Belüftungskanal vom Zitzengummikopf bis in den Bereich unterhalb der Zitze erstreckt, wird darin gesehen, dass beim Melkvorgang über diesen Belüftungskanal beginnend von der Zitzenspitze aus Vakuum nach oben "kriechen" kann, so dass je nach Form der Oberflächenbeschaffenheit der Zitze Bereiche des Zitzengewebes mit Vakuum beaufschlagt werden - diese Vakuumbeaufschlagung belastet zum einen das Gewebe und kann aufgrund eines daraus resultierenden Schmerzes negative Auswirkungen beim Melken hervorrufen.

Demgegenüber liegt der Erfindung die Aufgabe zugrunde, einen Zitzengummi zu schaffen, durch den die beschriebenen Nachteile vermieden oder verringert werden, so dass der Melkvorgang weiter verbessert wird.

Diese Aufgabe wird durch einen Zitzengummi mit den Merkmalen des Patentanspruches 1 gelöst.

Vorteilhafte Weiterbildungen der Erfindung sind Gegenstand der Unteransprüche.

Erfindungsgemäß hat der Zitzengummi ein Schlauchteil, das einen Zitzenaufnahmeraum und einen sich daran anschließenden Innenraum begrenzt.

Der Zitzengummi hat des Weiteren einen Zitzengummikopf, der einen Kopfraum begrenzt und an dem eine Belüftungsdüse angeordnet ist, über die Luft in den Kopfraum eintreten kann.

Der Zitzengummi hat erfindungsgemäß einen Belüftungskanal, über den der Innenraum belüftbar ist. Dieser Belüftungskanal ist kürzer als eine Zitze des zu melkenden Tieres ausgeführt - der Belüftungskanal erstreckt sich somit nicht, wie bei dem vorbeschriebenen Stand der Technik - vom Kopfraum bis in den Innenraum hinein. Das Schlauchteil (Schaft) ist des Weiteren derart ausgebildet, dass sich in einer Massagephase ein Luftströmungspfad öffnet, der den Belüftungskanal mit dem Innenraum verbindet.

Durch eine derartige Lösung werden die eingangs geschilderten Nachteile zuverlässig vermieden oder zumindest verringert, so dass die Funktion eines derartigen Zitzengummis derjenigen herkömmlicher Lösungen überlegen ist.

Die Belüftung erfolgt demnach nur in der Massagephase. Während der Saugphase ist die Zitze am Schaft (Schlauchteil) abgedichtet, so dass keine Belüftung des darunter liegenden Innenraums erfolgt.

Der Milchtransport zum Sammelstück oder zum Milchschlauch ist erfindungsgemäß dabei optimal gewährleistet. Bei Systemen mit natürlicher Vakuumentlastung im Zitzengummi wird durch den Lufteinlass die Vakuumabsenkung unterstützt.

Des Weiteren wird die eingelassene Luftmenge insgesamt reduziert und die mechanische Belastung der Milch verringert. Durch die Abdichtung in der Saugphase wird erreicht, dass das Vakuum in der Melkphase stabiler bleibt. Da der Belüftungskanal in der Saugphase nicht mit dem Vakuum verbunden ist, besteht auch keine Gefahr, das Vakuum in andere Bereiche des Zitzenschaftes "klettern" und "Gewebestress" verursachen kann.

Erfindungsgemäß wird der Luftströmungspfad durch eine, vorzugsweise etwa ovalförmige, Verformung des Schlauchteiles in der Massagephase ausgebildet. Mit anderen Worten gesagt, in der Massagephase wird durch die Verformung des Zitzengummis die Zitzengummiwandung von der Zitze gelöst und der Luftströmungspfad, d.h. die Verbindung zum Belüftungskanal hergestellt, so dass die Luftzufuhr erfolgen kann.

Der Melkvorgang lässt sich weiter verbessern, wenn im Bereich des vom Kopfraum entfernten Endabschnittes des Belüftungskanals im Zitzenaufnahmeraum ein Querkanal ausgebildet ist, der in Wirkverbindung mit dem Belüftungskanal steht. Durch diesen Querkanal ist sichergestellt, dass die Belüftung in der Massagephase immer zuverlässig ausgeübt wird unabhängig von der Einfaltrichtung des Zitzengummis und unabhängig von der Position des Einmündungsbereiches des Belüftungskanals.

Dieser Querkanal wird vorzugsweise als Ringkanal in der Innenumfangswandung des Schlauchteiles (Schaft) ausgeführt. Der Ringkanal wird dabei vorzugsweise so ausgebildet, dass durch weiche Übergangsradien auch eine einfache Entformung beim Herstellen in Längsrichtung möglich ist.

Zur Vermeidung einer Schwächung der Wandstärke im Bereich des Querkanals kann am Schlauchteil eine Verstärkungswulst ausgebildet sein.

Bei einem Ausführungsbeispiel der Erfindung ist es vorgesehen, zur Abdichtung der Zitze während der Saugphase an der Innenumfangswandung des Schlauchteiles eine in Radialrichtung vorstehende Dichtrippe vorzusehen, die die Abdichtung der Zitze mit Bezug zur Zitzengummiwandung verbessert.

Diese in Radialrichtung vorstehende Dichtrippe ist vorzugsweise umlaufend ausgebildet.

Bei einem Melkzeug für Kühe beträgt die Länge des Belüftungskanals (ab der Schaftöffnung/Schlauchteilöffnung) etwa 30 bis 60 mm. Die Länge des Zitzengummis wird dann entsprechend nach Rasse oder Herde unterschiedlich ausgeführt. Prinzipiell soll der Belüftungskanal so kurz sein, dass in der Saugphase die Zitze am Schlauchteil (Schaft) abgedichtet ist und in dieser Saugphase keine Belüftung erfolgt.

Bei einem Ausführungsbeispiel der Erfindung ist am Schlauchteil ein Dünnwandbereich ausgebildet, der in der Massagephase in Anlage an einen Schrägabschluss des Schlauchteiles bringbar ist, um den Innenraum gegenüber dem Vakuum abzusperren. Der Dünnwandbereich ist ebenfalls aus dem eingangs beschriebenen Stand der Technik bekannt.

Vorteilhafte Ausführungsbeispiele der Erfindung werden im Folgenden anhand schematischer Zeichnungen näher erläutert. Es zeigen:
Figur 1 einen Längsschnitt eines erfindungsgemäßen Zitzengummis;
Figur 2 eine Prinzipdarstellung eines Zitzengummis gemäß Figur 1 in einer Saugphase;
Figur 3 eine Detaildarstellung des Zitzengummis gemäß Figur 2;
Figur 4 den Zitzengummi gemäß Figur 2 in einer Massagephase;
Figur 5 einen Radialschnitt des Zitzengummis gemäß Figur 4 in der Massagephase und
Figur 6 einen der Figur 5 entsprechenden Schnitt durch einen Zitzengummi mit einer anderen Geometrie.

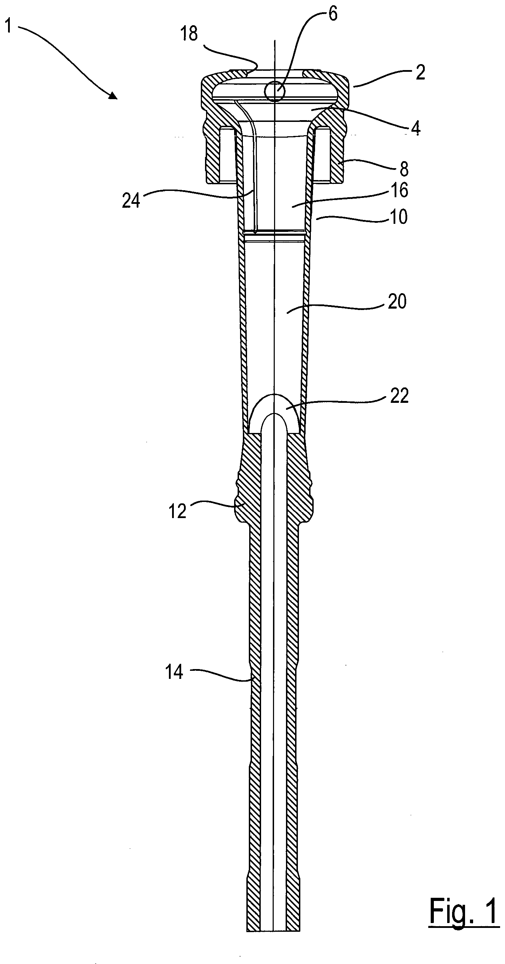

Figur 1 zeigt eine Darstellung eines Zitzengummis 1 eines Melkzeugs, der vorgesehen ist, in einen nicht dargestellten Melkbecher eingespannt zu werden. Hinsichtlich des prinzipiellen Aufbaus eines derartigen Melkzeugs sei auf den eingangs beschriebenen Stand der Technik verwiesen. Bei einem derartigen so genannten Zweiraummelkbecher liegt in einer Saugphase an der Zitze das Melkvakuum an, so dass Milch von der Zitze durch den Zitzengummi 1 und einen Milchschlauch zu einem Sammelstück abströmen kann.

In einer Massagephase wird durch den Einlass von Atmosphären- oder Überdruck in einen Ringraum zwischen dem Außenumfang des Zitzengummis und der Innenumfangswandung des oben genannten Melkbechers der Zitzengummi 1 eingefaltet (kollabieren), so dass das Blut von der Zitzenspitze zur Zitzenbasis zurückmassiert wird.

Der in Figur 1 dargestellte Zitzengummi 1 hat einen Zitzengummikopf 2, der einen Kopfraum 4 begrenzt. Dieser ist über eine Belüftungsdüse 6 mit der Atmosphäre verbunden.

Am Zitzengummikopf 2 ist des Weiteren eine Kopfmuffe 8 ausgebildet, die abschnittsweise mit einem zitzengummikopfseitigen Endabschnitt eines Schlauchteiles 10 überlappt und einen Ringraum bildet, in dem ein Endabschnitt des nicht dargestellten Melkbechers eintaucht. Der andere Endabschnitt des Melkbechers greift an einer Spannwulst 12 des Schlauchteiles an, so dass der Zitzengummi 1 in den Melkbecher eingespannt ist. Dieser hat einen Anschluss, über den der genannte Ringraum zwischen dem Schlauchteil 10 und dem Melkbecher über eine Pulsatorsteuerung mit Vakuum, Atmosphäre oder Überdruck verbindbar ist. Beim dargestellten Ausführungsbeispiel schließt sich an die Spannwulst 12 ein integrierter Milchschlauch 14 an, der an ein Sammelstück angeschlossen wird. Das Schlauchteil 10 (Schaft) umgreift einen Zitzenaufnahmeraum 16, in den die Zitze des zu melkenden Tieres durch eine Einführöffnung 18 des Zitzengummikopfes 2 hindurch eingeführt wird. Die Zitze erstreckt sich dabei jedoch lediglich entlang eines Teiles der Axiallänge des Schlauchteiles, so dass unterhalb dieses Zitzenaufnahmeraumes 16 ein Innenraum 20 des Schlauchteiles 10 verbleibt, der nicht durch die Zitze ausgefüllt ist. Im Übergangsbereich zur Spannwulst 12 ist der Innenraum 20 durch einen Schrägabschluss 22 begrenzt, der mittels eines dünnwandig ausgeführten Wandungsbereiches des Schlauchteiles 10 in der Massagephase verschlossen werden kann, so dass der Innenraum 20 gegenüber dem Vakuum abgesperrt ist. Die Wandstärke des Dünnwandbereiches ist im Hinblick auf das optimale Einfalten/Einfallen ausgelegt. Einzelheiten hierzu sind in dem eingangs zitierten Stand der Technik erläutert.

Wie im Folgenden noch näher erläutert wird, ist im Bereich des Zitzenaufnahmeraumes 16 ein Belüftungskanal 24 ausgebildet, der sich entlang der Zitze erstreckt, jedoch kürzer als die vorgesehene Zitzenlänge ausgeführt ist. D.h. der Belüftungskanal 24 mündet nicht direkt in den unter der Zitze angeordneten Innenraum 20 - dies wird anhand der folgenden Zeichnungen näher erläutert.

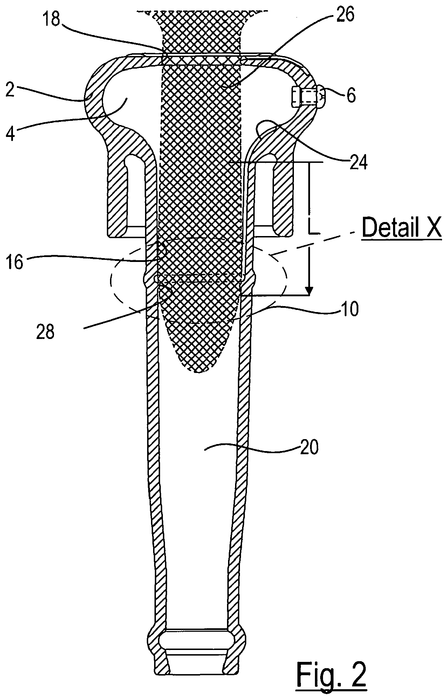

Figur 2 zeigt eine Ansicht einer Variante des Zitzengummis 1 gemäß Figur 1, wobei die Schnittebene so gelegt ist, dass sie sich durch den Belüftungskanal 24 erstreckt. Des Weitern wurde bei dem Schnitt gemäß Figur 2 der Milchschlauch 14 weggelassen, der bei diesem Ausführungsbeispiel nicht - wie in Figur 1 - integral mit dem Schlauchteil 10 ausgeführt ist sondern als zusätzliches Bauelement angesetzt wird.

In der Darstellung gemäß Figur 2 ist die Zitze 26 angedeutet, die - wie vorstehend ausgeführt - durch die Einführöffnung 18 des Zitzengummikopfes 2 hindurch in den Zitzenaufnahmeraum 16 eingeführt ist. Der Belüftungskanal 24 ist als verrundete Nut im Schlauchteil 10 und im Übergangsbereich zum Zitzengummikopf 2 ausgeführt. Die Axiallänge, d.h. die Längserstreckung in das Schlauchteil 10 hinein ist jedoch so gewählt, dass der Belüftungskanal 24 kürzer ist als die Länge L, mit der die Zitze 26 im Schlauchteil (Schaft) 10 aufgenommen ist. Mit anderen Worten gesagt, der vom Zitzengummikopf 2 entfernte Endabschnitt des Belüftungskanals 24 endet in einem Bereich, der in der Darstellung gemäß Figur 2 noch von der Zitze 26 überdeckt ist. Die Länge des Belüftungskanals 24 kann beispielsweise bei einem Melkzeug für Kühe zwischen 30 und 60 mm betragen. Bei Melkzeugen für andere Tiere, wie beispielsweise Schafe oder Ziegen können auch andere Längen des Belüftungskanals 24 gewählt werden.

Figur 2 zeigt den Zitzengummi 1 in der Saugphase - das Schlauchteil 10 liegt dabei dichtend am Umfang der Zitze 26 an, so dass über den Belüftungskanal 24 keine Fluidverbindung von dem Innenraum 20 zur Atmosphäre bzw. zum Kopfraum 4 und der darin mündenden Belüftungsdüse 6 erfolgt. Diese kragt nach außen hin, über den Außenumfang des Zitzengummikopfes 2 aus, wobei zumindest dieser Bereich aus einem von Hand deformierbaren Material ausgebildet ist, so dass die Belüftungsdüse 6 - wie in der eingangs genannten WO 2015/055821 A1 beschrieben - auf einfache Weise gereinigt werden kann.

Diese Abdichtung in der Saugphase wird durch eine radial vorstehende, umlaufend an der Innenumfangswandung des Schlauchteiles 10 ausgebildete Dichtrippe 28 unterstützt, die in der Saugphase dichtend an der Zitze 26 anliegt.

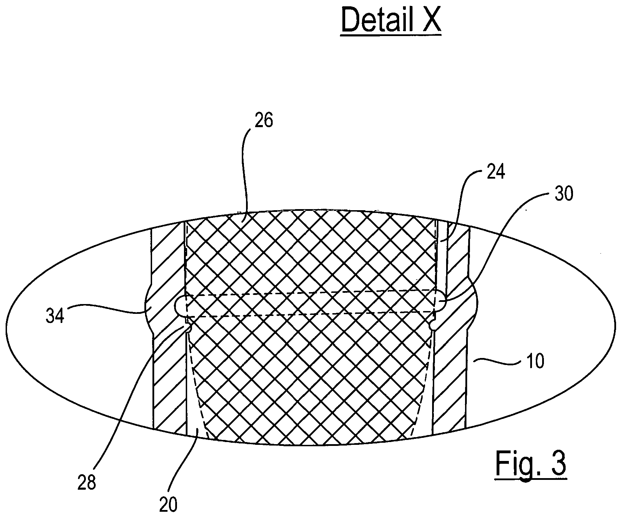

Wie in der Detaildarstellung in Figur 3 gezeigt, mündet der Belüftungskanal 24 in einem quer dazu angeordneten, ringförmig umlaufenden Ringkanal 30. Wie dargestellt, ist dieser Ringkanal 30 oberhalb der Dichtrippe 28, d.h. zum Zitzengummikopf 2 hin versetzt angeordnet. Aus der Detaildarstellung gemäß Figur 3 geht deutlich hervor, dass die Schlauchteilwandung 10 unterhalb des Ringkanals 30 dichtend mit der Zitzenwandung abschließt, wobei diese Abdichtung durch die radial vorstehende Dichtrippe 28 begünstigt ist. In der dargestellten Saugphase besteht somit keine Verbindung zwischen dem unterhalb der Zitze 26 angeordneten Innenraum 20 und dem Kopfraum 4 bzw. der Atmosphäre.

Da durch den Ringkanal 30 die Wandung des Schlauchteiles 10 geschwächt ist, ist gemäß Figur 3 im Bereich des Ringkanals 30 eine Verstärkungswulst 34 ausgebildet, die beispielsweise als umlaufender, verrundeter Vorsprung an der Außenumfangswandung des Schlauchteiles 10 ausgebildet ist.

Wie eingangs erläutert, sind die Verstärkungswulst 34, der Belüftungskanal 24 und auch der Ringkanal 30 so ausgebildet, dass ein Entformen des Zitzengummis aus einem Spritzgießwerkzeug vereinfacht ist.

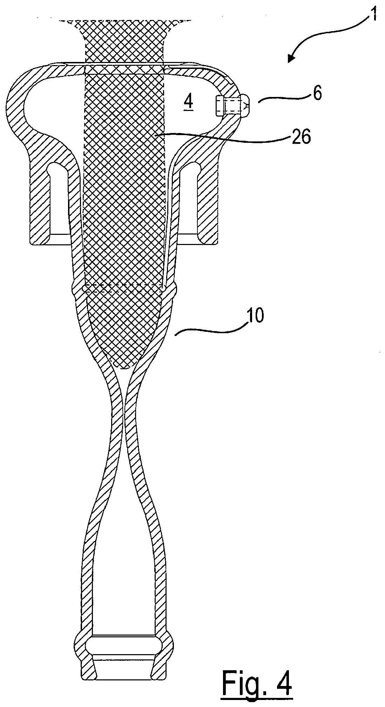

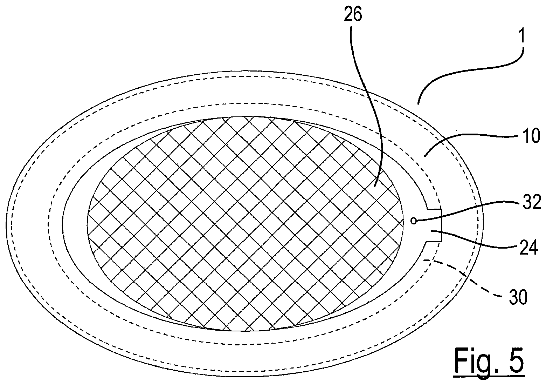

Figur 4 zeigt den Zitzengummi 1 in der Massagephase. Wie eingangs erläutert, kollabiert der Zitzengummi 1 oder genauer gesagt das Schlauchteil 10 in der Massagephase, wobei auch der Schrägabschluss 22 überdeckt wird. Dabei wird die Zitze 26, wie in Figur 4 angedeutet, massiert. Beim Kollabieren verformt sich die Zitzenwandung oval, so dass gemäß der Prinzipdarstellung in Figur 5 ein zwischen dem Außenumfang der Zitze 26 und der Innenumfangswandung des Schlauchteiles 10 ausgebildeter Luftströmungspfad 32 geöffnet wird, der es ermöglicht, dass Luft bzw. Atmosphärendruck von der Belüftungsdüse 6 über den Kopfraum 4, den Belüftungskanal 24 und den Luftströmungspfad 32 in den unterhalb der Zitze 26 gelegenen Bereich des Schlauchteiles 10 gelangt, so dass die Zitze 26 vollumfänglich entlastet wird.

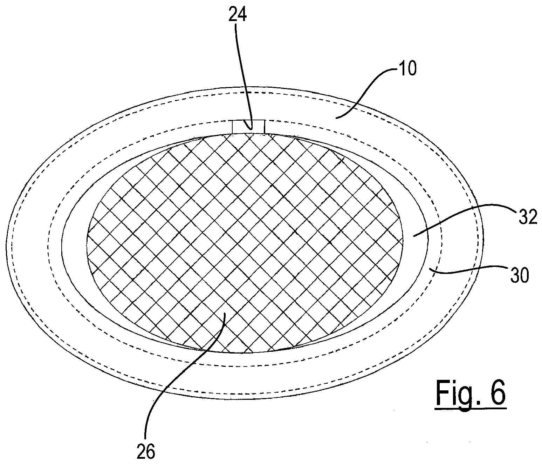

In der Darstellung gemäß Figur 5 erfolgt das Kollabieren des Schlauchteiles 10 derart, dass sich der Luftströmungspfad 32 im Bereich des Belüftungskanals 24 ausbildet. Prinzipiell ist dies gemäß der Darstellung in Figur 6 jedoch nicht erforderlich, da beispielsweise bei einer Positionierung des Belüftungskanals 24 in Einfaltrichtung (siehe Figur 6) der sich quer zur Einfaltrichtung öffnende Luftströmungspfad 32 über den Ringkanal 30 mit dem Belüftungskanal 24 verbunden ist, so dass in der Massagephase der Atmosphärendruck auch unterhalb der Zitze 26 wirksam ist.

In der Saugphase erfolgt dann wiederum die anhand der Figuren 2 und 3 beschriebene Abdichtung mit den damit einhergehenden, in der Beschreibungseinleitung erläuterten Vorteilen.

Offenbart ist ein Zitzengummi, bei dem ein Belüftungskanal in einem Schlauchteil kürzer als die darin aufgenommene Zitze ausgebildet ist.

### Bezugszeichenliste:

- 1: Zitzengummi
- 2: Zitzengummikopf
- 4: Kopfraum
- 6: Belüftungsdüse
- 8: Kopfmuffe
- 10: Schlauchteil
- 12: Spannwulst
- 14: Milchschlauch
- 16: Zitzenaufnahmeraum
- 18: Einführöffnung
- 20: Innenraum
- 22: Schrägabschluss
- 24: Belüftungskanal
- 26: Zitze
- 28: Dichtrippe
- 30: Ringkanal
- 32: Luftströmungspfad
- 34: Verstärkungswulst

## Patentansprüche

1. Zitzengummi mit einem Schlauchteil (10), das einen Zitzenaufnahmeraum (16) und einen sich daran anschließenden Innenraum (20) begrenzt und mit einem Zitzengummikopf (2), der einen Kopfraum (4) bildet und in dem eine Belüftungsdüse (6) vorgesehen ist, über die der Kopfraum (4) mit der Atmosphäre verbunden ist und mit einem Belüftungskanal (24), zum Belüften des Innenraums (20), **dadurch gekennzeichnet, dass** der Belüftungskanal (24) kürzer als die Länge (L) einer Zitze (26) des zu melkenden Tieres ist, wobei das Schlauchteil (10) derart ausgebildet ist, dass sich in einer Massagephase ein Luftströmungspfad (32) öffnet, der den Belüftungskanal (24) mit dem Innenraum (20) verbindet, wobei sich der Luftströmungspfad (32) durch eine, vorzugsweise etwa ovalförmige, Verformung des Schlauchteiles (10) in der Massagephase ausbildet.

2. Zitzengummi nach Patentanspruch 1, wobei im Bereich eines zum Innenraum (20) weisenden Endabschnittes des Belüftungskanals (24) ein Querkanal ausgebildet ist.

3. Zitzengummi nach Patentanspruch 2, wobei der Querkanal als Ringkanal (30) ausgeführt ist.

4. Zitzengummi nach Patentanspruch 2 oder 3, mit einer am Schlauchteil (10) ausgebildeten, in den Zitzenaufnahmeraum (16) vorstehenden Dichtrippe (28).

5. Zitzengummi nach Patentanspruch 4, wobei die Dichtrippe (28) umlaufend ausgeführt ist.

6. Zitzengummi nach einem der Patentansprüche 2 bis 5, wobei am Außenumfang des Schlauchteiles (10) im Bereich des Querkanals eine Verstärkungswulst (34) ausgebildet ist.

7. Zitzengummi nach einem der vorhergehenden Patentansprüche, wobei die Länge des Belüftungskanals (24) bei einem Melkzeug für Kühe zwischen 30 und 60 mm beträgt.

8. Zitzengummi nach einem der vorhergehenden Patentansprüche, wobei das Schlauchteil (10) einen Dünnwandbereich hat, der in der Massagephase in Anlage an einen Schrägabschluss (22) des Schlauchteiles (10) bringbar ist.

## Claims

1. A teat cup liner comprising a hose part (10) which delimits a teat receiving space (16) and an interior (20) adjacent thereto, and comprising a teat cup liner head (2) which forms a head space (4) and in which a ventilation nozzle (6) is provided through which the head space (4) is connected to the atmosphere, and comprising a ventilation duct (24) for venting the interior (20), **characterized in that** the ventilation duct (24) is shorter than the length (L) of a teat (26) of the animal to be milked, the hose part (10) being designed so that an air flow path (32) connecting the ventilation duct (24) to the interior (20) opens in a massage phase, wherein the air flow path (32) is formed by a, preferably approximately oval-shaped, deformation of the hose part (10) during the massage phase.

2. The teat cup liner according to claim 1, wherein a transverse duct is formed in the area of an end portion of the ventilation duct (24) facing the interior (20).

3. The teat cup liner according to claim 2, wherein the transverse duct is an annular duct (30).

4. The teat cup liner according to claim 2 or 3, comprising a sealing rib (28) formed on the hose part (10) and projecting into the teat receiving space (16).

5. The teat cup liner according to claim 4, wherein the sealing rib (28) is circumferential.

6. The teat cup liner according to any one of the claims 2 to 5, wherein a reinforcing bead (34) is formed on the outer periphery of the hose part (10) in the area of the transverse duct.

7. The teat cup liner according to any one of the preceding claims, wherein the length of the ventilation duct (24) in a milker for cows is between 30 and 60 mm.

8. The teat cup liner according to any one of the preceding claims, wherein the hose part (10) has a thin-walled portion which, during the massage phase, can be brought in abutment on a sloping end (22) of the hose part (10).

## Revendications

1. Manchon trayeur présentant une partie en tuyau (10) délimitant un espace de réception de trayon (16) et une espace intérieur (20) s'y rattachant et présentant une tête de manchon trayeur (2) formant un espace de tête (4) et dans lequel est prévue une buse d'aération (6) à travers laquelle l'espace de tête (4) est relié à l'atmosphère et présentant un canal d'aération (24) pour aérer l'espace intérieur (20), **caractérisé en ce que** le canal d'aération (24) est plus court que la longueur (L) d'un trayon (26) de l'animal à traire, la partie en tuyau (10) étant conçue de sorte qu'un trajet d'écoulement d'air (32) s'ouvre au cours d'une phase de massage et qui relie le canal d'aération (24) à l'espace intérieur (20), le trajet d'écoulement d'air (32) se formant à travers une déformation de préférence nettement ovale de la partie en tuyau (10) au cours de la phase de massage.

2. Manchon trayeur selon la revendication 1, un canal transversal étant formé dans la zone d'une section d'extrémité du canal d'aération (24) orientée vers l'espace intérieur (20).

3. Manchon trayeur selon la revendication 2, le canal transversal étant exécuté en canal annulaire (30).

4. Manchon trayeur selon la revendication 2 ou la revendication 3, présentant une nervure d'isolation (28) saillant dans l'espace de réception de trayon (16) et formée à la partie en tuyau (10).

5. Manchon trayeur selon la revendication 4, la nervure d'isolation (28) étant formée en périphérique.

6. Manchon trayeur selon l'une des revendications 2 à 5, un bourrelet de renforcement (34) étant formé sur la circonférence extérieure de la partie en tuyau (10) dans la zone du canal transversal.

7. Manchon trayeur selon l'une des revendications précédentes, la longueur du canal d'aération (24) pour une trayeuse pour vaches étant entre 30 et 60 mm.

8. Manchon trayeur selon l'une des revendications précédentes, la partie en tuyau (10) présentant une zone à paroi mince pouvant être amenée en position tangente à une fermeture oblique (22) de la partie en tuyau (10) au cours de la phase de massage.
